# EUROPEAN PATENT APPLICATION

(11) **EP 4 742 747 A1**
(43) Date of publication of application: **13.05.2026**
(21) Application number: 23944572.9
(22) Date of filing: 07.07.2023
(51) Int. Cl.: H04W 28/24

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: Mewburn Ellis LLP
(86) International application number: PCT/CN2023/106408
(87) International publication number: WO 2025/010549

(57) **Abstract**

Provided are a wireless communication method and a communication device. The method comprises: a first network element sends to a second network element a QoS parameter associated with a first sensing service, wherein the QoS parameter is determined on the basis of a requirement parameter of the first sensing service. According to embodiments of the present application, a corresponding QoS parameter is determined on the basis of a requirement parameter of a sensing service, and because the QoS parameter determined in this way takes the requirement of the sensing service into account, user-plane transmission of the sensing service is facilitated.

## Description

### TECHNICAL FIELD

The present application relates to the field of communication, and in particular, to a wireless communication method and a communication device.

### BACKGROUND

With the development of communication technology, communication systems have gradually begun to support sensing services. Sensing services involve large volumes of sensing data transmission with stringent quality requirements. Hence, in order to meet quality requirements of sensing services, it is necessary to configure appropriate QoS parameters for the user-plane connection of a terminal device. It is evident that how to configure user plane information for a specific sensing service to meet its transmission requirements over the user plane is a problem that needs to be solved.

### SUMMARY

The present application provides a wireless communication method and a communication device. The various aspects of the present application will be introduced below.

In a first aspect, a wireless communication method is provided, and the method includes: transmitting, by a first network element, a QoS parameter associated with a first sensing service to a second network element; where the QoS parameter is determined based on a requirement parameter of the first sensing service.

In a second aspect, a wireless communication method is provided, and the method includes: receiving, by a second network element, a QoS parameter associated with a first sensing service transmitted by a first network element; where the QoS parameter is determined based on a requirement parameter of the first sensing service.

In a third aspect, a communication device is provided, which is a first network element. The first network element includes: a communication module, configured to transmit a QoS parameter associated with a first sensing service to a second network element; where the QoS parameter is determined based on a requirement parameter of the first sensing service.

In a fourth aspect, a communication device is provided, which is a second network element. The second network element includes: a communication module, configured to receive a QoS parameter associated with a first sensing service transmitted by a first network element; where the QoS parameter is determined based on a requirement parameter of the first sensing service.

In a fifth aspect, a communication device is provided and includes a transceiver, a memory and a processor. The memory is configured to store a program, and the processor is configured to invoke the program in the memory and control the transceiver to receive or transmit signals, to cause the terminal device to perform the method in the first aspect or the second aspect.

In a sixth aspect, an apparatus is provided and includes a processor. The processor is configured to invoke a program from a memory, to cause the apparatus to perform the method in the first aspect or the second aspect.

In a seventh aspect, a chip is provided and includes a processor. The processor is configured to invoke a program from a memory, to cause a device equipped with the chip to perform the method in the first aspect or the second aspect.

In an eighth aspect, a computer-readable storage medium is provided and is configured to store a program. The program causes a computer to perform the method in the first aspect or the second aspect.

In a ninth aspect, a computer program product is provided and includes a program. The program causes a computer to perform the method in the first aspect or the second aspect.

In a tenth aspect, a computer program is provided. The computer program causes a computer to perform the method in the first aspect or the second aspect.

The embodiments of the present application propose to determine a corresponding QoS parameter based on a requirement parameter of a sensing service. Since the requirements of the sensing service are taken into account, the QoS parameter determined in this way facilitates the transmission of the sensing service over the user plane.

### BRIEF DESCRIPTION OF THE DRAWINGS

FIG. 1 is an example diagram showing a system architecture of a wireless communication system to which the embodiments of the present application are applicable.
FIG. 2 is a system architecture diagram of a 5th generation (5G) communication system.
FIG. 3 is an example diagram showing a communication system architecture with a sensing network element provided in the embodiments of the present application.
FIG. 4 is a schematic flowchart of a wireless communication method provided in the embodiments of the present application.
FIG. 5 is a schematic flowchart of a possible implementation of the method shown in FIG. 4.
FIG. 6 is a schematic flowchart of another possible implementation of the method shown in FIG. 4.
FIG. 7 is a schematic flowchart of another possible implementation of the method shown in FIG. 4.
FIG. 8 is a schematic flowchart of another possible implementation of the method shown in FIG. 4.
FIG. 9 is a block diagram of a communication device provided in an embodiment of the present application.
FIG. 10 is a block diagram of a communication device provided in another embodiment of the present application.
FIG. 11 is a schematic diagram of an apparatus according to the embodiments of the present application.

### DETAILED DESCRIPTION

Technical solutions in the present application will be described below with reference to the accompanying drawings.

### Wireless communication system

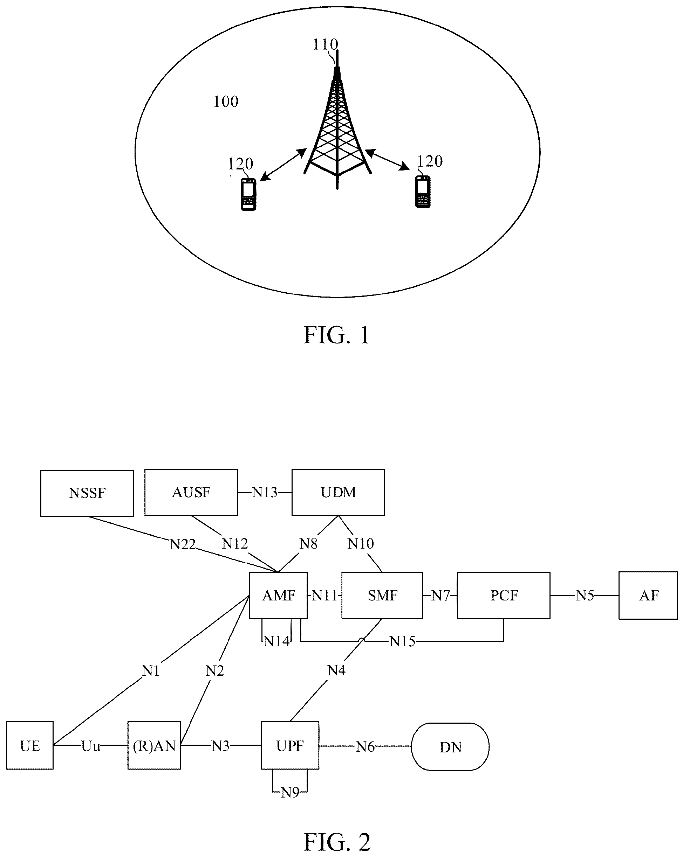

FIG. 1 is an example diagram showing a system architecture of a wireless communication system 100 to which embodiments of the present application are applicable. The wireless communication system 100 may include a network device 110 and terminal devices 120. The network device 110 may be a device that communicates with the terminal device 120. The network device 110 may provide network coverage for a specific geographical area and may communicate with the terminal device 120 located within the coverage area. The terminal device 120 may access a network (e.g., a wireless network) via the network device 110. Optionally, the wireless communication system 100 may further include other network entities such as a network controller and a mobility management entity, which is not limited in the embodiments of the present application.

It should be understood that the technical solution of the embodiments of the present application may be applied to various communication systems, such as: a 5G system or a new radio (NR), a long term evolution (LTE) system, an LTE frequency division duplex (FDD) system, and an LTE time division duplex (TDD). The technical solution provided by the present application may also be applied to the future communication system, such as a sixth-generation mobile communication system, or a satellite communication system.

In the embodiments of the present application, the terminal device may also be referred to as a user equipment (UE), an access terminal, a user unit, a user station, a mobile station, a mobile station (MS), a mobile terminal (MT), a remote station, a remote terminal, a mobile device, a user equipment, a terminal, a wireless communication device, a user agent or a user apparatus. In the embodiments of the present application, the terminal device may refer to a device that provides voice and/or data connectivity to a user and may be used to connect people, objects and machines, such as a handheld device or in-vehicle device with a wireless connection function. In the embodiments of the present application, the terminal device may be a mobile phone, a tablet computer (Pad), a laptop computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Optionally, the terminal device may be configured to act as a base station. For example, the terminal device may act as a scheduling entity that provides sidelink signals between terminal devices in vehicle to everything (V2X) or device to device (D2D). For example, a cellular phone and a car may communicate with each other by using sidelink signals. A cellular phone and a smart home device may communicate with each other directly, without relaying communication signals via a base station.

In the embodiments of the present application, the network device may be a device used for communicating with a terminal device, and the network device may also be referred to as an access network device or a wireless access network device. For example, the network device may be a base station. The base station may broadly cover or be interchanged with the following various names: a NodeB, an evolved NodeB (eNB), a next generation NodeB (gNB), a relay station, an access point, a transmitting and receiving point (TRP), a transmitting point (TP), a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or similar entities, or a combination thereof.

Terminal devices may communicate with each other via sidelinks. Sidelink communication may also be referred to as proximity services (ProSe) communication, unilateral communication, sidelink communication, or D2D communication.

### 5G network system architecture and sensing network elements

The 5G network system architecture is shown in FIG. 2. In the system architecture, the UE establishes an access stratum connection with an access node (AN) via the air interface (Uu interface) to exchanges access stratum messages and transmit wireless data. The UE establishes a non-access stratum (NAS) connection with an access and a mobility management function (AMF) via an N1 interface and exchanges NAS messages. In addition to managing UE mobility, the AMF is also responsible for forwarding session management-related messages between the UE and the SMF. A policy control function (PCF) is responsible for formulating policy related to the mobility management, session management, and charging of UE. A user plane function (UPF) transmits data with an external data network (DN) via an N6 interface, and transmits data with the AN via an N3 interface.

Current cellular networks (including 5G networks) are primarily used for wireless data transmission and communication. However, radio electromagnetic wave signals used by the cellular networks are not only applicable to wireless data transmission and communication, but also have environmental sensing capability. For example, the radio electromagnetic wave signals in the cellular network may be used for user action or gesture recognition, breathing monitoring, terminal device movement velocity measurement, environmental imaging, weather monitoring, etc. Therefore, the cellular network may also be used for obtaining sensing information.

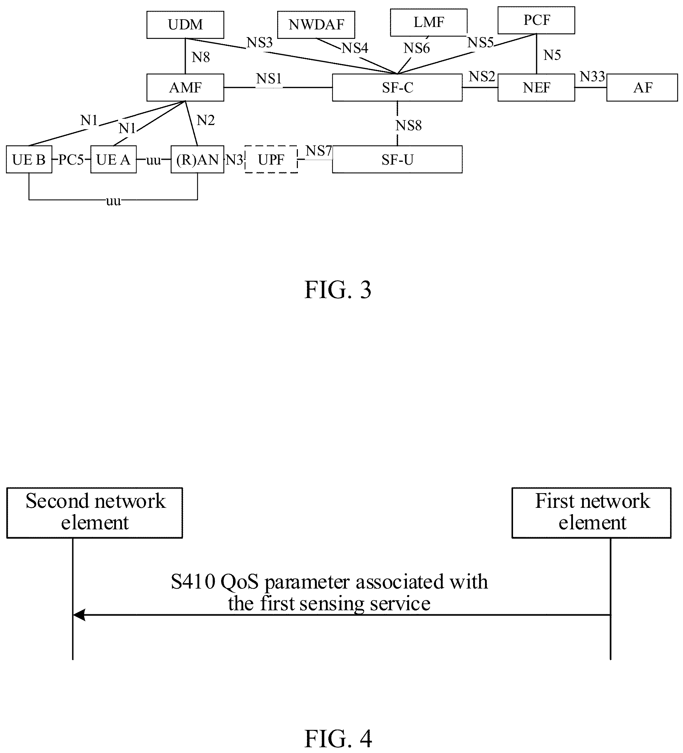

Currently, the support of sensing capability in the B5G (beyond 5G) network is under discussion. For example, the sensing capability may be supported in the 3rd generation partnership project (3GPP) network by introducing a sensing network element (also referred to as a sensing control network element) and corresponding procedures. FIG. 3 shows an example of a network system architecture supporting sensing capability. As shown in FIG. 3, a sensing network element (i.e., the sensing function (SF) in FIG. 3) is introduced into a core network to handle sensing-related operations. Upon receiving a sensing request from an application, the core network of the 3GPP network may select a correct base station or auxiliary terminal device via the sensing network element or the AMF, and trigger the base station or auxiliary terminal device to cause a sensing-related wireless measurement capability, so as to initiate measurements of sensing information and ultimately generate a sensing result.

The main sensing links or sensing methods in integrated sensing and communication scenarios include the following:
1. a base station echo sensing link (single base station sensing): a base station transmits a sensing signal and receives an echo signal;
2. an inter-base station sensing link (base station to base station sensing): base station B receives a sensing signal transmitted by base station A;
3. an air interface uplink sensing link (terminal device to base station uplink sensing): a base station receives a sensing signal transmitted by a terminal;
4. an air interface downlink sensing link (terminal device to base station downlink sensing): a terminal device receives a sensing signal transmitted by a base station;
5. a terminal echo sensing link (single terminal device sensing): a terminal device transmits a sensing signal and receives an echo signal; and
6. an inter-terminal sensing link (terminal device to terminal device sensing): terminal device B receives a sensing signal transmitted by terminal device A.

In the early stage of B5G integrated sensing and communication, the focus is on maximizing reusing the existing air interface signals to perform a sensing behavior without introducing excessive air interface enhancements. In addition, considering complexity of full-duplex implementation, collaborative sensing between terminal devices and/or base stations is a prioritized consideration. Among the sensing methods listed above, sensing methods 3-6 may require the terminal device to report a large amount of sensing data to the sensing network element in the core network or obtain auxiliary data from the core network element.

Currently, considering the large amount of interactive data between the terminal device and the sensing network element, the terminal device may transmit data with the sensing network element via the user plane to complete necessary interactions for the sensing service. For example, the terminal device may transmit the sensing data to the sensing network element via the UPF by establishing a protocol data unit (PDU) session (which may be a special PDU session). In an example where the sensing network element is SF shown in FIG. 3, the sensing network element may include an SF-C (a control plane network element of the SF) and an SF-U (a user plane network element of the SF) in some implementations. The terminal device can, for example, transmit sensing data to the SF-U via the UPF. Of course, SF, SF-C, and SF-U are merely example names for these network elements. These network elements may also have other names, or may be collocated with a location management function (LMF), which is not specifically limited in the embodiments of the present application.

### Requirement parameters of the sensing service

Requirement parameters of the sensing service may include, for example, a sensing scenario, a sensing area or a sensing service area, a confidence level, accuracy of positioning estimate by sensing (for a target confidence level), accuracy of velocity estimate by sensing (for a target confidence level), sensing resolution, a maximum sensing service latency, a refreshing rate, a probability of missed detection (also referred to as a missed detection rate), and a false alarm rate.

Sensing scenarios may include, for example, one or more of intrusion monitoring, respiratory monitoring, motion capture, and autonomous driving. The sensing area may indicate one or more types of information, such as indoor, outdoor, and area size. The confidence level may be used to represent the reliability of the sensing result. The accuracy of positioning estimate by sensing for a target confidence level may be simply referred to as position estimation accuracy, and may include, for example, horizontal position accuracy and vertical position accuracy. The position accuracy may be expressed in one or more units such as meters, decimeters, or centimeters. The accuracy of velocity estimate by sensing for a target confidence level may be simply referred to as velocity estimation accuracy, and may include, for example, horizontal velocity accuracy and vertical velocity accuracy. The velocity accuracy may be expressed in one or more units such as meter/second, decimeter/second, or centimeter/millisecond. The sensing resolution may include, for example, resolution of sensing range and resolution of sensing velocity. The refreshing rate may be, for example, 10 refreshes per second.

### Quality of Service (QoS) parameters

The QoS parameters may include, for example, one or more of the following parameters: an allocation and retention priority (ARP), a guaranteed flow bit rate (GFBR), a maximum flow bit rate (MFBR), a maximum packet loss rate (MPLR), and a 5G QoS identifier (5QI) related parameter. In the above QoS parameters, the GFBR may include an uplink GFBR or a downlink GFBR, the MFBR may include an uplink MFBR or a downlink MFBR, and the MPLR may include an uplink MPLR or a downlink MPLR. In addition, among the QoS parameters, 5QI-related parameters may include one or more of the following parameters: a priority level (or a default priority level), a resource type (e.g., a guaranteed bit rate (GBR) type or a Non-GBR type), a packet delay budget (PDB), a packet error rate (PER), a maximum data burst volume (MDBV), etc. 5QI facilitates templated configuration for specific service types by defining a 5QI serial number and a corresponding set of default values for the above 5QI-related parameters.

Currently, positioning services, which are similar to sensing services, also adopt a design of transmitting data via the user plane. However, since the amount of data that needs to be transmitted for positioning services is small, the QoS requirement is not high, and therefore no QoS configuration solution has been designed for positioning services. Currently, positioning requirements (e.g., accuracy) are only transmitted to an LMF, so that the LMF can select appropriate positioning nodes and methods. Positioning requirements do not affect the QoS requirements of the user plane. However, for sensing services, the amount of sensing data that needs to be transmitted is large and the requirements are strict (e.g., different sensing services may have strict requirements on one or more of precision, accuracy, and latency). In order to meet quality requirements of sensing services, it is necessary to configure appropriate QoS parameters (e.g., a transmission rate, a maximum latency, and a packet error rate) for the user-plane connection of a terminal device. Hence, how to configure user plane information for a specific sensing service to meet its transmission requirements over the user plane is a problem that needs to be solved.

To address the above problem, the embodiments of the present application propose to determine the corresponding QoS parameter requirements (e.g., a transmission rate, a maximum latency, and a packet error rate) based on the requirements of a sensing service (such as precision and accuracy) so as to meet the transmission requirements of the sensing service over the user plane. The embodiments of the present application will be described in detail below with reference to FIG. 4.

FIG. 4 is a schematic flowchart of a wireless communication method provided in the embodiments of the present application. The method in FIG. 4 includes step S410, that is, a first network element transmits a QoS parameter associated with a first sensing service to a second network element. The QoS parameter is determined based on a requirement parameter of the first sensing service.

In some embodiments, the requirement parameter of the first sensing service may include one or more parameters described in the section "requirement parameters of the sensing service".

In some embodiments, the requirement parameter of the first sensing service may include one or more of the following parameters:
a requested sensing method;
a type of the sensing service;
a sensing scenario;
a sensing service level (different sensing scenarios may be classified into different service levels);
a sensing area (e.g., one or more of: indoor or outdoor, an area size, and a type of a sensing target);
a confidence level (indicating reliability of the sensing result);
position estimation accuracy (including horizontal position accuracy and/or vertical position accuracy (in meters/decimeters/centimeters));
velocity estimation accuracy (including horizontal velocity accuracy and/or vertical velocity accuracy);
sensing resolution (e.g., range resolution and/or velocity resolution);
a maximum sensing service latency;
a refreshing rate (e.g., 10 refreshes per second);
a probability of missed detection rate (also referred to as the missed detection rate); and
a false alarm rate.

The QoS parameter mentioned above may also be referred to as a QoS requirement, a QoS requirement parameter, a user-plane QoS parameter or user plane QoS information. In some embodiments, the QoS parameter may include one or more of: an ARP, a GFBR, a MFBR, a MPLR, and a 5QI-related parameter. In the above QoS parameters, the GFBR may include an uplink GFBR or a downlink GFBR, the MFBR may include an uplink MFBR or a downlink MFBR, and the MPLR may include an uplink MPLR or a downlink MPLR. In addition, among these QoS parameters, the 5QI-related parameter may include one or more of the following parameters: a priority level, a resource type (e.g., a GBR or a Non-GBR), a PDB, a PER, a MDBV, etc.

In some embodiments, the requirement parameter of the first sensing service may include one or more of: a sensing scenario and a sensing service level. The QoS parameter may include one or more of: an ARP, a priority (or default priority, priority level), and a resource type. That is, one or more of the sensing scenario and the sensing service level may be determined based on one or more of the ARP, the priority level, and the resource type.

In some embodiments, the requirement parameter of the first sensing service may include one or more of: a confidence level, a missed detection rate, and a false alarm rate; and the QoS parameter may include one or more of: a PER and a maximum packet loss rate. That is, one or more of the packet error rate and the maximum packet loss rate may be determined based on one or more of the confidence level, the missed detection rate, and the false alarm rate.

In some embodiments, the requirement parameter of the first sensing service may include the maximum sensing service latency; and the QoS parameter may include one or more of: a PDB and a latency requirement. That is, the PDB or the latency requirement may be determined based on the maximum sensing service latency.

In some embodiments, the requirement parameter of the first sensing service may include one or more of: sensing accuracy and sensing resolution; and the QoS parameter includes a MDBV. That is, the MDBV may be determined based on one or more of the sensing accuracy and the sensing resolution.

In some embodiments, the requirement parameter of the first sensing service may include one or more of: a refreshing rate, sensing accuracy, sensing resolution, and a sensing scenario; and the QoS parameter may include one or more of: a GFBR, a MFBR, and a bandwidth requirement. That is, one or more of the GFBR, the MFBR, and the bandwidth requirement may be determined based on one or more of the refreshing rate, the sensing accuracy, the sensing resolution, and the sensing scenario.

In some embodiments, after the QoS parameter is determined, the 5QI may be further determined based on the QoS parameter.

In some embodiments, the 5QI may be determined directly based on a sensing requirement parameter of the first sensing service. The 5QI may also be understood as one kind of QoS parameter, or the QoS parameter involved in step S410 may be represented by the 5QI. For example, the 5QI corresponding to the first sensing service may be directly determined based on one or more of: a sensing scenario, a confidence level, a missed detection rate, a false alarm rate, sensing accuracy, and sensing resolution.

The embodiments of the present application do not specifically limit the network element that determines the QoS parameter based on the requirement parameter of the first sensing service, which may be a core network element or a terminal device. The type of this network element and the corresponding procedure will be described more detail below with reference to Embodiment 1 and Embodiment 2.

### Embodiment 1: the QoS parameter is determined by a network element with sensing function in a core network (hereinafter referred to as a sensing network element)

The sensing network element may be an independent network element (as shown in FIG. 3), or may be co-located with other network elements. For example, the sensing network element may be co-located with an LMF. In this case, the sensing network element may refer to the LMF. The name of the sensing network element is not specifically limited in the embodiments of the present application. For example, the sensing network element may also be referred to as a sensing control network element, a sensing function, or a LMF.

### Embodiment 1.1: the first network element is a sensing network element, and the second network element is a terminal device associated with the first sensing service

In embodiment 1.1, the first network element in step S410 is the sensing network element, and the second network element is the terminal device associated with the first sensing service. That is to say, after the sensing network element determines a QoS parameter, it transmits the QoS parameter to the terminal device. The sensing network element may transmit part or all of the determined QoS parameters to the terminal device. For example, the sensing network element may transmit one or more parameters of the GFBR, the MFBR, the ARP, and the 5QI to the terminal device.

In some implementations, before step S410, the sensing network element may first receive a sensing request from a network element requesting the first sensing service. The network element requesting the first sensing service may sometimes be referred to as a consumer network function (consumer NF). The network element requesting the first sensing service may be, for example, an application function (AF), a network exposure function (NEF), an AMF, a UE, or a gateway mobile location centre (GMLC). The sensing request may include relevant information of the first sensing service. The relevant information of the first sensing service may include the requirement parameter of the first sensing service mentioned above. Furthermore, in some embodiments, the relevant information of the first sensing service may further include information of a sensing target, such as one or more of an area, a target terminal device, and features of a target object.

In some implementations, the sensing network element may first discover the terminal device before transmitting the QoS parameter to the terminal device. For example, the sensing network element may discover a corresponding terminal device based on the information of the sensing target provided by the network element requesting the first sensing service. For example, the sensing network element may discover the terminal device by querying other network elements (e.g., AMF/unified data repository (UDR)/unified data management (UDM)). In another example, the sensing network element may discover the terminal device by querying local information. The sensing network element may determine the terminal device that is to perform the first sensing service or the terminal device that is to join the session corresponding to the first sensing service, based on the sensing capability information of the discovered terminal device.

In some implementations, after the terminal device receives the QoS parameter, it may transmit a session modification request to an SMF. The session modification request may include one or more of the following information: a session ID corresponding to the first sensing service, data packet identification information of a service data flow (SDF), a QoS flow ID and corresponding QoS parameters. The service data flow mentioned here may be a service data flow of the first sensing service, and the data packet identification information may be, for example, a packet filter. In the solution in Embodiment 1.1, the sensing network element determines the corresponding QoS requirement based on the sensing requirement parameter, and then the terminal device initiates a session modification procedure toward the SMF to implement the configuration of QoS related parameters. The above processing method guarantees the QoS requirements of the sensing service transmitted over the user plane, thereby ensuring that the terminal device can meet the requirements of the sensing service when transmitting sensing data via the user plane, and ultimately ensuring the normal execution of the sensing service. In addition, in this solution, QoS requests are primarily made by the terminal device, resulting in almost no modifications to core network signaling.

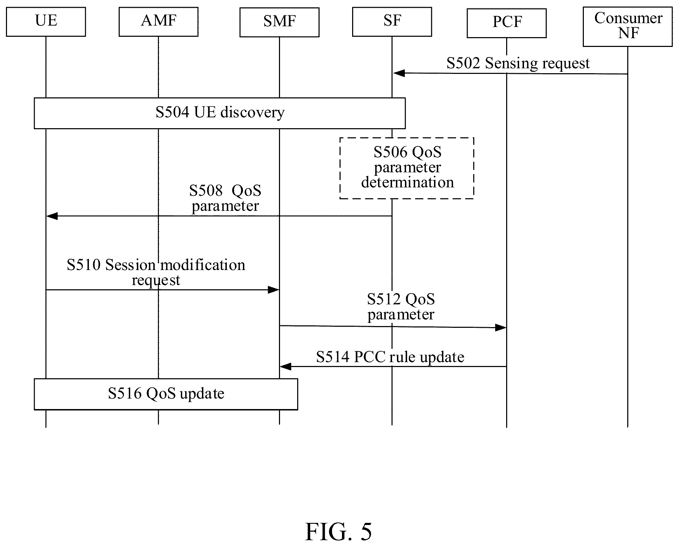

A possible implementation of Embodiment 1.1 will be described below with reference to FIG. 5. In the example shown in FIG. 5, the sensing network element is the SF, the terminal device is the UE, and the network element used to request the sensing service is the consumer NF. In addition, in the example shown in FIG. 5, after receiving the sensing request and selecting the corresponding terminal device, the SF transmits user plane information for sensing data interaction (which may include one or more of the SF's internet protocol (IP) address information, and fully qualified domain name (FQDN) information) to the terminal device. In addition, in the example shown in FIG. 5, the QoS parameter is determined by the SF based on the sensing requirement parameter of the first sensing service and is transmitted by the SF to the terminal device. Subsequently, the terminal device requests the SMF to implement QoS modification through a session modification approach, thereby completing the QoS configuration for the user-plane connection of the first sensing service.

Referring to FIG. 5, in step S502, the consumer NF transmits a sensing request to the SF. The sensing request includes relevant information of the first sensing service. For example, the sensing request may include information of the sensing target (e.g., an area, a target UE, or features of a target object). In addition, the sensing request may further include sensing requirement parameters of the first sensing service. The sensing requirement parameters of the first sensing service may include, for example, one or more of: a requested sensing method and/or type of the sensing service (e.g., a sensing scenario), a sensing service level (different sensing scenarios may be classified into corresponding levels), a sensing area (e.g., indoor or outdoor, an area size, or a type of a sensing target), a confidence level (reliability of the sensing result), position estimation accuracy (including horizontal position accuracy and/or vertical position accuracy (in units such as meters/decimeters/centimeters)), velocity estimation accuracy (including horizontal velocity accuracy and/or vertical velocity accuracy), sensing resolution (e.g., range resolution and/or velocity resolution), a maximum sensing service latency, a refreshing rate (e.g., 10 refreshes per second), a missed detection rate, and a false alarm rate.

In step S504, the SF discovers the corresponding UE according to the information of the sensing target requested by the consumer NF. For example, the SF may discover the UE by querying other network elements (e.g., AMF/UDR/UDM), or by querying local information. The SF determines a UE that is to perform the first sensing service or a UE that is to join the session corresponding to the first sensing service based on the discovered UE and its sensing capability information.

In step S506, the SF determines the QoS parameter (also referred to as user plane QoS information) of the first sensing service according to the sensing request. For example, the SF may determine one or more of the ARP, the priority level, and the resource type based on one or more of the sensing scenario and the sensing service level. In another example, the SF may determine one or more of the packet error rate and the maximum packet loss rate based on one or more of the confidence level, the missed detection rate, and the false alarm rate. In another example, the SF may determine the PDB or the latency requirement based on the maximum sensing service latency. In another example, the SF may determine one or more of the GFBR, the MFBR, and the bandwidth requirement based on one or more of the refreshing rate, sensing accuracy, sensing resolution, and sensing scenario. The SF may further determine the corresponding 5QI according to the above QoS parameters, or directly determine the corresponding 5QI according to the sensing scenario, the confidence level, the missed detection rate, the false alarm rate, the sensing accuracy, or the sensing resolution.

In step S508, the SF delivers the QoS parameter to the UE (or in other words, the SF delivers the QoS requirement to the UE). For example, the SF may deliver all or part of QoS parameters determined in step S530 to the UE. For example, the SF may transmit one or more of the determined GFBR, MFBR, ARP, 5QI to the UE. Exemplarily, the SF may deliver the QoS parameter via the AMF in the form of a NAS message.

In step S510, the UE initiates a session modification request to the SMF. The session modification request may include one or more of: a session ID corresponding to the sensing service, a QoS flow ID, data packet identification information of the SDF, a QoS flow ID, and a corresponding QoS parameter. The service data flow mentioned here may be a service data flow of the first sensing service, and the data packet identification information may be, for example, a packet filter.

In step S512, the SMF transmits a new QoS parameter to the PCF to request the PCF to authorize the new QoS parameter.

In step S514, after authorizing the new QoS parameter, the PCF transmits an updated PCC rule to the SMF.

In step S516, network elements such as the UE and the SMF perform QoS update.

In this solution, the SF determines the corresponding QoS parameter based on sensing requirements, and then the UE initiates a session modification procedure towards the SMF to implement configuration of QoS related parameters. The processing method can ensure the QoS requirements for the transmission of sensing data of sensing service over the user plane, thereby guaranteeing that the UE can meet the requirements of the sensing service when transmitting sensing data via the user plane, and consequently ensuring the normal execution of the sensing service. In this solution, QoS requests are primarily made by the UE, resulting in almost no modifications to core network signaling.

### Embodiment 1.2: the first network element is a sensing network element, and the second network element is a PCF corresponding to an IP address of the terminal device (associated with the first sensing service)

In Embodiment 1.2, the first network element in step S410 is the sensing network element, the second network element is the PCF, and the PCF corresponds to the IP address of the terminal device associated with the first sensing service. In Embodiment 1.2, the sensing network element determines a QoS parameter and transmits the QoS parameter to the PCF, so as to implement the QoS configuration for the user-plane connection of the first sensing service. This approach requires almost no modification to the terminal device and only minor modification to the related network elements in the core network.

In some implementations, the sensing network element may transmit the QoS parameter directly to the PCF.

In some implementations, the sensing network element may transmit the QoS parameter to the PCF via an AF.

In some implementations, before step S410, the sensing network element may first receive a sensing request from a network element requesting the first sensing service. The network element requesting the first sensing service may sometimes be referred to as a consumer NF. The network element requesting the first sensing service may be, for example, an AF, an NEF, an AMF, a UE, or a GMLC. The sensing request may include relevant information of the first sensing service. The relevant information of the first sensing service may include the requirement parameter of the first sensing service mentioned above. In some embodiments, the relevant information of the first sensing service may further include information of a sensing target, such as one or more of an area, a target terminal device, and features of a target object.

In some implementations, before step S410, the sensing network element may first discover the terminal device. For example, the sensing network element may discover the corresponding terminal device based on the information of the sensing target provided by the network element requesting the first sensing service. The sensing network element may discover the terminal device by querying other network elements (e.g., AMF/UDR/UDM,). Alternatively, the sensing network element may discover the terminal device by querying local information. The sensing network element may determine the terminal device that is to perform the first sensing service or the terminal device that is to join the session corresponding to the first sensing service, based on sensing capability information of the discovered terminal device.

In some implementations, before performing step S410, the sensing network element may first perform query procedure to determine the PCF corresponding to the IP address of the terminal device. For example, the sensing network element may perform query procedure via a binding support function (BSF) to determine the PCF corresponding to the IP address of the terminal device. By locating the corresponding user-plane connection through the IP address of the terminal device, the query result is more accurate, which facilitates individual user plane configuration for each terminal device.

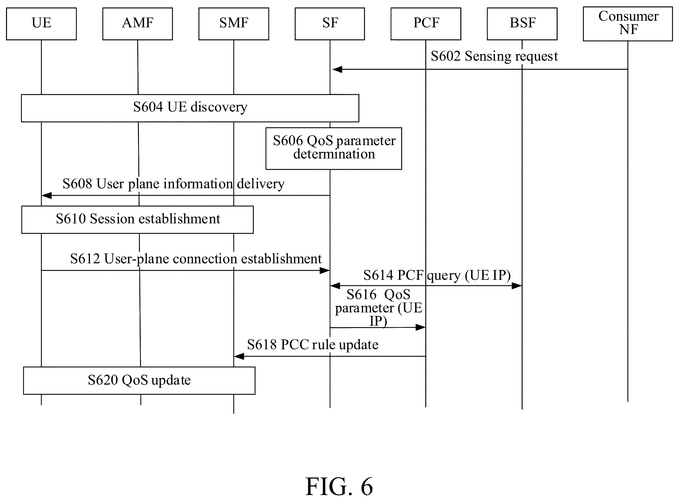

A possible implementation of Embodiment 1.2 will be described below with reference to FIG. 6. In the example shown in FIG. 6, the sensing network element is the SF, the terminal device is the UE, and the network element used to request the sensing service is the consumer NF. In addition, in the example shown in FIG. 6, after the SF receives the sensing request and discovers and selects the terminal device, the SF transmits user plane information for sensing data interaction (e.g., IP address information, and FQDN information) to the terminal device. In addition, in the example shown in FIG. 6, the SF determines the QoS parameter according to the sensing requirement of the first sensing service, and communicates with the PCF to implement QoS modification, thereby completing the QoS configuration for the user-plane connection of corresponding first sensing service.

Referring to FIG. 6, in step S602, the consumer NF transmits a sensing request to the SF. The sensing request includes relevant information of the first sensing service. For example, the sensing request may include information of the sensing target (e.g., an area, a target UE, or features of a target object). In addition, the sensing request may further include a sensing requirement parameter of the first sensing service. The sensing requirement parameter of the first sensing service may include, for example, one or more of: a requested sensing method and/or type of the sensing service (e.g., a sensing scenario), a sensing service level (different sensing scenarios may be classified into corresponding levels), a sensing area (e.g., indoor or outdoor, an area size, or a type of a sensing target), a confidence level (reliability of the sensing result), position estimation accuracy (including horizontal position accuracy and/or vertical position accuracy (in units such as meters/decimeters/centimeters)), velocity estimation accuracy (including horizontal velocity accuracy and/or vertical velocity accuracy), sensing resolution (e.g., range resolution and/or velocity resolution), a maximum sensing service latency, a refreshing rate (e.g., 10 refreshes per second), a missed detection rate, and a false alarm rate.

In step S604, the SF discovers the corresponding UE according to the information of the sensing target requested by the consumer NF. For example, the SF may discover the UE by querying other network elements (e.g., AMF/UDR/UDM), or by querying local information. The SF determines a UE that is to perform the first sensing service or a UE that is to join the session corresponding to the first sensing service based on the discovered UE and its sensing capability information.

In step S606, the SF determines the QoS parameter (also referred to as user plane QoS information) of the first sensing service according to the sensing request. For example, the SF may determine one or more of the ARP, the priority level, and the resource type based on one or more of the sensing scenario and the sensing service level. In another example, the SF may determine one or more of the packet error rate and the maximum packet loss rate based on one or more of the confidence level, the missed detection rate, and the false alarm rate. In another example, the SF may determine the PDB or the latency requirement based on the maximum sensing service latency. In another example, the SF may determine one or more of the GFBR, the MFBR, and the bandwidth requirement based on one or more of the refreshing rate, sensing accuracy, sensing resolution, and sensing scenario. SF may further determine the corresponding 5QI according to the above QoS parameters, or directly determine the corresponding 5QI according to the sensing scenario, the confidence level, the missed detection rate, the false alarm rate, the sensing accuracy, or the sensing resolution.

In step S608, the SF delivers its own address information (e.g., FQDN or IP address) used for user-plane sensing data transmission to the selected UE.

In step S610, after receiving the user-plane address information, the UE initiates session establishment to establish a session for transmitting sensing data over the user plane.

In step S612, after the session establishment is completed, the UE establishes a user-plane connection with the SF. During the establishment procedure of the user-plane connection between the UE and the SF or after the connection is established, the SF may obtain IP address information of the UE and the corresponding sensing service information.

In step S614, the SF queries a BSF for a PCF corresponding to the UE IP.

In step S616, the SF determines the QoS parameter corresponding to the UE IP (according to the information obtained in steps S606 and S612), and transmits the QoS parameter to the PCF corresponding to the UE IP.

In step S618, the PCF delivers PCC rule update to an SMF corresponding to the UE IP, and performs QoS adjustment on the session and/or QoS flow corresponding to the UE IP.

In step S620, network elements such as the UE and SMF perform QoS update.

In this solution, the SF determines the QoS parameter and directly transmits the QoS parameter to the PCF by querying the BSF, thereby implementing user plane QoS configuration. The above process requires no modification to the UE, and involves only minor modification to the relevant network elements in the core network. In addition, locating the corresponding user-plane connection through the UE IP enables more precise result, making the approach suitable for per-UE individual configuration scenarios.

### Embodiment 1.3: the first network element is a sensing network element, and the second network element is a UDR

In Embodiment 1.3, the first network element in step S410 is the sensing network element, and the second network element is the UDR.

In some embodiments, before step S410, the sensing network element may first receive a sensing request from a network element requesting the first sensing service. The network element requesting the first sensing service may sometimes be referred to as a consumer NF. The network element requesting the first sensing service may be, for example, an AF, an NEF, an AMF, a UE, or a GMLC. The sensing request may include relevant information of the first sensing service. The relevant information of the first sensing service may include the requirement parameter of the first sensing service mentioned above. In some embodiments, the relevant information of the first sensing service may further include information of a sensing target, such as one or more of an area, a target terminal device, and features of a target object.

In some implementations, before step S410, the sensing network element may first discover the terminal device. For example, the sensing network element may discover the corresponding terminal device based on the sensing target information provided by the network element requesting the first sensing service. The sensing network element may discover the terminal device by querying other network elements (e.g., AMF/UDR/UDM). Alternatively, the sensing network element may discover the terminal device by querying local information. The sensing network element may determine the terminal device that is to perform the first sensing service or the terminal device that is to join the session corresponding to the first sensing service, based on sensing capability information of the discovered terminal device.

In some implementations, when transmitting a QoS parameter to the UDR, the sensing network element may simultaneously carry an identifier of the terminal device (e.g., subscription permanent identifier (SUPI) or generic public subscription identifier (GPSI) of the terminal device), and/or a data network name (DNN) corresponding to the first sensing service, and/or single network slice selection assistance information (S-NSSAI). In this solution, the sensing network element determines the QoS parameter and transmits the QoS parameter (also referred to as the QoS requirement) directly to the UDR using the identifier of the terminal device, the DNN, and/or the S-NSSAI as an index. Alternatively, the sensing network element may transmit the QoS parameter to the UDR via network elements such as an AF, a GMLC and/or an NEF. When the terminal device initiates a session establishment/session modification procedure, the PCF may obtain the QoS parameter (also referred to as the QoS requirement) from the UDR, so as to implement the QoS configuration for the user-plane connection. The above process requires almost no modification to the terminal device and only minor modification to the relevant network elements in the core network. In addition, delivering QoS parameters (also referred to as the QoS requirements) based on the identifier of the terminal device, the DNN, and/or the S-NSSAI allows the same configuration to be applied to multiple terminal devices simultaneously, reducing signaling overhead.

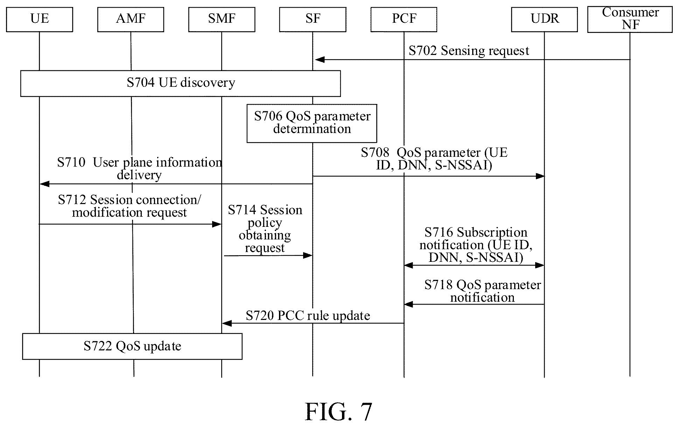

A possible implementation of Embodiment 1.3 will be described below with reference to FIG. 7. In the example shown in FIG. 7, the sensing network element is the SF, the terminal device is the UE, and the network element used to request the sensing service is the consumer NF. In addition, in the example shown in FIG. 7, after the SF receives the sensing request and discovers and selects the terminal device, the SF transmits user plane information for sensing data interaction (e.g., IP address information, and FQDN information) to the terminal device. In addition, in the example shown in FIG. 7, the SF determines the QoS parameter according to the sensing requirement of the first sensing service, and the QoS parameter is stored in the UDR. Subsequently, the PCF is notified to implement QoS modification through interaction, thereby completing QoS configuration for user-plane connection of the sensing service.

Referring to FIG. 7, in step S702, the consumer NF transmits a sensing request to the SF. The sensing request includes relevant information of the first sensing service. For example, the sensing request may include information of the sensing target (e.g., an area, a target UE, or features of a target object). In addition, the sensing request may further include a sensing requirement parameter of the first sensing service. The sensing requirement parameter of the first sensing service may include, for example, one or more of: a requested sensing method and/or type of the sensing service (e.g., a sensing scenario), a sensing service level (different sensing scenarios may be classified into corresponding levels), a sensing area (e.g., indoor or outdoor, an area size, or a type of a sensing target), a confidence level (reliability of the sensing result), position estimation accuracy (including horizontal position accuracy and/or vertical position accuracy (in units such as meters/decimeters/centimeters)), velocity estimation accuracy (including horizontal velocity accuracy and/or vertical velocity accuracy), sensing resolution (e.g., range resolution and/or velocity resolution), a maximum sensing service latency, a refreshing rate (e.g., 10 refreshes per second), a missed detection rate, and a false alarm rate.

In step S704, the SF discovers the corresponding UE according to the target information requested by the consumer NF. For example, the SF may discover the UE by querying other network elements (e.g., AMF/UDR/UDM), or by querying local information. The SF determines the UE that is to perform the first sensing service or the UE that is to join the session corresponding to the first sensing service, based on the discovered UE and its sensing capability information.

In step S706, the SF determines the QoS parameter (also referred to as user plane QoS information) of the first sensing service according to the sensing request. For example, the SF may determine one or more of the ARP, the priority level, and the resource type based on one or more of the sensing scenario and the sensing service level. In another example, the SF may determine one or more of the packet error rate and the maximum packet loss rate based on one or more of the confidence level, the missed detection rate, and the false alarm rate. In another example, the SF may determine the PDB or the latency requirement based on the maximum sensing service latency. In another example, the SF may determine one or more of the GFBR, the MFBR, and the bandwidth requirement based on one or more of the refreshing rate, sensing accuracy, sensing resolution, and sensing scenario. SF may further determine the corresponding 5QI according to the above QoS parameters, or directly determine the corresponding 5QI according to the sensing scenario, the confidence level, the missed detection rate, the false alarm rate, the sensing accuracy, or the sensing resolution.

In step S708, the SF transmits the QoS parameter (also referred to as the QoS requirement) to the UDR. The QoS parameter may include one or more user-plane QoS parameters of the first sensing service. In addition, when transmitting the QoS parameter to the UDR, the SF may carry the UE ID (e.g., an SUPI or a GPSI, etc.) and the DNN and/or S-NSSAI corresponding to the sensing service. The SF may transmit the QoS parameter to the UDR directly or via network elements such as the AF, the GMLC and/or the NEF.

In step S710, the SF delivers its own address information (e.g., FQDN or IP address) used for user-plane sensing data transmission to the selected UE. In addition, the SF may further transmit the DNN and S-NSSAI to the UE.

In step S712, after receiving the user-plane address information, the UE initiates the session establishment/modification request to establish a session for transmitting the sensing data over the user plane.

In step S714, after receiving the session establishment/modification request, the SMF requests to obtain a corresponding session policy from the PCF.

In step S716, the PCF subscribes to notifications from the UDR. The subscription notifications may include one or more of: a UE ID, a DNN corresponding to the first sensing service, and an S-NSSAI.

In step S718, the UDR initiates a notification to the PCF based on the subscription information of the PCF. The notification may include the QoS parameter (also referred to as the QoS requirement).

In step S720, the PCF delivers the updated PCC rule to an SMF corresponding to the UE ID, to perform QoS adjustment for the session and/or QoS flow corresponding to the UE ID, DNN, and/or S-NSSAI.

In step S722, network elements such as the UE and the SMF perform QoS update.

In this solution, the sensing network element determines the QoS parameter and transmits the QoS parameter (also referred to as the QoS requirement) directly to the UDR using the UE identifier (ID), the DNN and/or the S-NSSAI as indexes. When the UE initiates a session establishment/session modification procedure, the PCF may obtain the QoS parameter (also referred to as the QoS requirement) from the UDR, so as to implement the QoS configuration for the user-plane connection. The above process requires almost no modification to the UE and only minor modification to the relevant network elements in the core network. In addition, delivering QoS parameters (also referred to as the QoS requirements) based on the UE ID, the DNN, and/or the S-NSSAI allows the same configuration to be applied to multiple UEs simultaneously, thereby reducing signaling overhead.

### Embodiment 2: the QoS parameter is determined by a terminal device associated with the first sensing service

In Embodiment 2, the first network element may be the terminal device, and the second network element may be an SMF.

In some implementations, step S410 may include: transmitting, by the first network element, a session modification request to the second network element, where the session modification request includes a QoS parameter. The terminal device determines the corresponding QoS parameter based on a sensing requirement parameter of the first sensing service, and then the terminal device initiates a session modification procedure to the SMF to implement QoS parameter configuration. This approach can ensure the QoS requirements for transmission of sensing data of sensing service over the user plane, thereby guaranteeing that the terminal device can meet the requirement of the sensing service when transmitting sensing data via the user plane, and consequently ensuring the normal execution of the sensing service. In this solution, QoS requests are primarily made by the UE, resulting in almost no modifications to core network signaling.

Furthermore, in some implementations, the session modification request may further include one or more of: an identifier of a session corresponding to the first sensing service, and an identifier of a QoS flow in the session.

In some implementations, before step S410, the terminal device may first receive the requirement parameter of the first sensing service from the sensing network element. For example, the terminal device may receive parameters such as a sensing scenario and/or a sensing area from the sensing network element.

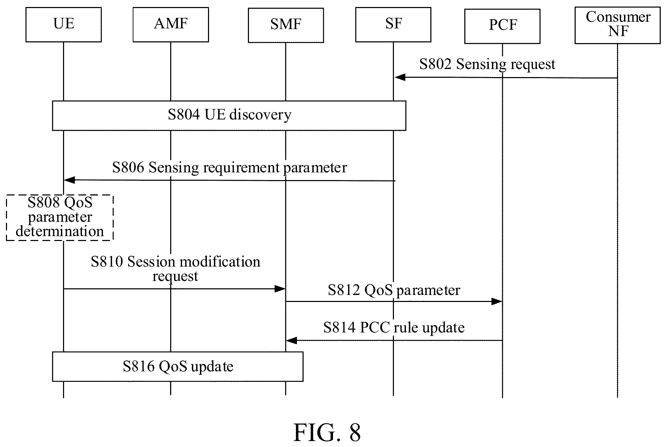

A possible implementation of Embodiment 2 will be described below with reference to FIG. 8. In the example shown in FIG. 8, the sensing network element is an SF, the terminal device is a UE, and the network element used to request the sensing service is a consumer NF. In addition, in the example shown in FIG. 8, after receiving the sensing request and selecting a corresponding UE, the SF transmits user plane information for sensing data interaction (which may include one or more of IP address information, and FQDN information) to the UE. In addition, in the example shown in FIG. 8, the SF directly delivers a sensing requirement parameter of the first sensing service, and the terminal device autonomously determines QoS parameters according to the sensing requirement of the first sensing service. Subsequently, the terminal device requests the SMF to implement QoS modification through a session modification approach, thereby completing the QoS configuration for the user-plane connection of the first sensing service.

Referring to FIG. 8, in step S802, the consumer NF transmits a sensing request to the SF. The sensing request includes relevant information of the first sensing service. For example, the sensing request may include information of the sensing target (e.g., an area, a target UE, or features of a target object). In addition, the sensing request may further include sensing requirement parameters of the first sensing service. The sensing requirement parameters of the first sensing service may include, for example, one or more of: a requested sensing method and/or type of the sensing service (e.g., a sensing scenario), a sensing service level (different sensing scenarios may be classified into corresponding levels), a sensing area (e.g., indoor or outdoor, an area size, or a type of a sensing target), a confidence level (reliability of the sensing result), position estimation accuracy (including horizontal position accuracy and/or vertical position accuracy (in units such as meters/decimeters/centimeters)), velocity estimation accuracy (including horizontal velocity accuracy and/or vertical velocity accuracy), sensing resolution (e.g., range resolution and/or velocity resolution), a maximum sensing service latency, a refreshing rate (e.g., 10 refreshes per second), a missed detection rate, and a false alarm rate.

In step S804, the SF discovers a corresponding UE according to the information of the sensing target requested by the consumer NF. For example, the SF may discover the UE by querying other network elements (e.g., AMF/UDR/UDM), or by querying local information. The SF determines a UE that is to perform the first sensing service or a UE that is to join the session corresponding to the first sensing service based on the discovered UE and its sensing capability information.

In step S806, the SF delivers a sensing requirement parameter of the first sensing service to the UE. For example, the SF may transmit the sensing requirement parameter to the UE via an AMF. The sensing requirement parameter may include, for example, one or more of a sensing scenario, and a sensing area.

In step S808, the UE determines a QoS parameter according to the sensing requirement parameter of the first sensing service. For example, the UE may determine one or more of the ARP, the priority level, and the resource type based on one or more of the sensing scenario and the sensing service level. In another example, the UE may determine one or more of the packet error rate and the maximum packet loss rate based on one or more of the confidence level, the missed detection rate, and the false alarm rate. In another example, the SF may determine the PDB or the latency requirement based on the maximum sensing service latency. In another example, the UE may determine one or more of the GFBR, the MFBR, and the bandwidth requirement based on one or more of the refreshing rate, sensing accuracy, sensing resolution, and sensing scenario. The UE may further determine a corresponding 5QI based on the above QoS parameters, or directly determine the corresponding 5QI based on the sensing scenario, the confidence level, the missed detection rate, the false alarm rate, the sensing accuracy, or the sensing resolution,.

In step S810, the UE initiates a session modification request to an SMF. The session modification request may include a session ID corresponding to the sensing service, a QoS flow ID, and a corresponding QoS requirement.

In step S812, the SMF requests a PCF to authorize a new QoS parameter.

In step S814, after the PCF authorizes the new QoS parameter, the PCF transmits an updated PCC rule to the SMF.

In step S816, network elements such as the UE and the SMF perform QoS update.

In this solution, the UE determines the corresponding QoS parameter based on sensing requirements, and then the UE initiates a session modification procedure towards the SMF to implement configuration of QoS related parameters. The processing method can ensure the QoS requirements for the transmission of sensing service data over the user plane, thereby guaranteeing that the UE can meet the requirements of the sensing service when transmitting sensing data via the user plane, and consequently ensuring the normal execution of the sensing service. In this solution, QoS requests are primarily made by the UE, resulting in almost no modifications to core network signaling.

The sensing service mentioned in the above embodiments may also be referred to as or replaced by a sensing task, a sensing session, a sensing service, a sensing requests, etc. The sensing service may refer to, for example, a specific sensing task, such as perform sensing on a target object or environment.

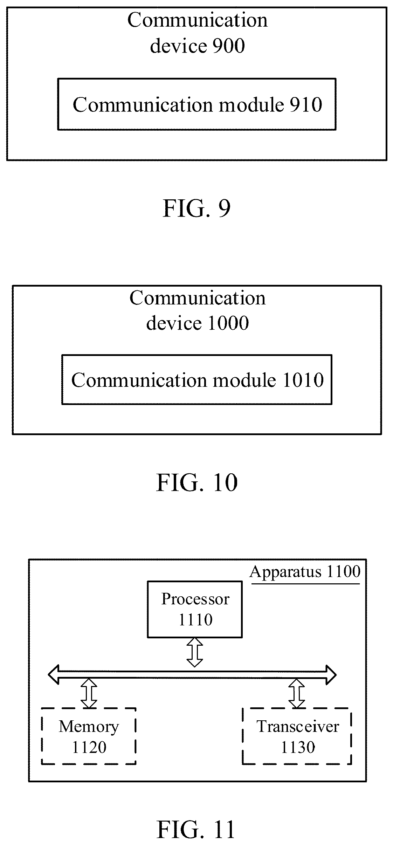

The method embodiments of the present application are described in detail above with reference to FIGS. 1 to 8, and the apparatus embodiments of the present application will be described in detail below with reference to FIGS. 9 to 11. It should be understood that the description of the method embodiments correspond to the description of the apparatus embodiments. Therefore, for any sections not elaborated in detail, reference may be made to the prior method embodiments.

FIG. 9 is a block diagram of a communication device provided in an embodiment of the present application. The communication device 900 in FIG. 9 may be the first network element mentioned above. The communication device 900 may include a communication module 910. The communication module 910 may be configured to transmit a QoS parameter associated with a first sensing service to a second network element; where the QoS parameter is determined based on a requirement parameter of the first sensing service.

In some embodiments, the QoS parameter is determined by a network element with sensing function in a core network.

In some embodiments, the first network element is the network element with sensing function, and the second network element is a terminal device associated with the first sensing service; or the first network element is the network element with sensing function, and the second network element is a PCF, and the PCF corresponds to an IP address of the terminal device associated with the first sensing service; or the first network element is the network element with sensing function, and the second network element is a UDR.

In some embodiments, the QoS parameter is determined by a terminal device associated with the first sensing service.

In some embodiments, the first network element is the terminal device, the second network element is an SMF, and the communication module is configured to transmit a session modification request to the second network element, where the session modification request includes the QoS parameter.

In some embodiments, the session modification request further includes one or more of: an identifier of a session corresponding to the first sensing service; and an identifier of a QoS flow in the session.

In some embodiments, the communication module is further configured to: receive the requirement parameter of the first sensing service from a network element with sensing function, before the first network element transmits the QoS parameter associated with the first sensing service to the second network element.

In some embodiments, the requirement parameter of the first sensing service includes one or more of: a sensing scenario and a sensing service level; and the QoS parameter includes one or more of: an allocation and retention priority, a priority level, and a resource type.

In some embodiments, the requirement parameter of the first sensing service includes one or more of: a confidence level, a missed detection rate, and a false alarm rate; and the QoS parameter includes one or more of: a packet error rate and a maximum packet loss rate.

In some embodiments, the requirement parameter of the first sensing service includes a maximum sensing service latency; and the QoS parameter includes one or more of: a packet delay budget and a latency requirement.

In some embodiments, the requirement parameter of the first sensing service includes one or more of: sensing accuracy and sensing resolution; and the QoS parameter includes a maximum data burst volume.

In some embodiments, the requirement parameter of the first sensing service includes one or more of: a refreshing rate, sensing accuracy, sensing resolution, and a sensing scenario; and the QoS parameter includes one or more of: a guaranteed flow bit rate, a maximum flow bit rate, and a bandwidth requirement.

FIG. 10 is a block diagram of a communication device provided in another embodiment of the present application. The communication device 1000 in FIG. 10 may be the second network element mentioned above. The communication device 1000 may include a communication module 1010. The communication module 1010 may be configured to receive the QoS parameter associated with the first sensing service transmitted by the first network element; where the QoS parameter is determined based on the requirement parameter of the first sensing service.

In some embodiments, the QoS parameter is determined by a network element with sensing function in a core network.

In some embodiments, the first network element is the network element with sensing function, and the second network element is a terminal device associated with the first sensing service; or the first network element is the network element with sensing function, and the second network element is a PCF, and the PCF corresponds to an IP address of a terminal device associated with the first sensing service; or the first network element is the network element with sensing function, and the second network element is a UDR.

In some embodiments, the QoS parameter is determined by a terminal device associated with the first sensing service.

In some embodiments, the first network element is the terminal device, the second network element is an SMF, and the communication module is configured to receive a session modification request transmitted by the first network element, where the session modification request includes the QoS parameter.

In some embodiments, the session modification request further includes one or more of: an identifier of a session corresponding to the first sensing service; and an identifier of a QoS flow in the session.

In some embodiments, the requirement parameter of the first sensing service includes one or more of: a sensing scenario and a sensing service level; and the QoS parameter includes one or more of: an allocation and retention priority, a priority level, and a resource type.

In some embodiments, the requirement parameter of the first sensing service includes one or more of: a confidence level, a missed detection rate, and a false alarm rate; and the QoS parameter includes one or more of: a packet error rate and a maximum packet loss rate.

In some embodiments, the requirement parameter of the first sensing service includes a maximum sensing service latency; and the QoS parameter includes one or more of: a packet delay budget and a latency requirement.

In some embodiments, the requirement parameter of the first sensing service includes one or more of: sensing accuracy and sensing resolution; and the QoS parameter includes a maximum data burst volume.

In some embodiments, the requirement parameter of the first sensing service includes one or more of: a refreshing rate, sensing accuracy, sensing resolution, and a sensing scenario; and the QoS parameter includes one or more of: a guaranteed traffic bit rate, a maximum traffic bit rate, and a bandwidth requirement.

FIG. 11 is a block diagram of a communication apparatus according to embodiments of the present application. The dashed lines in FIG. 11 indicate that the unit or module is optional. The apparatus 1100 may be configured to implement the methods described in the above method embodiments. The apparatus 1100 may be a chip, a terminal device, or a network device.

The apparatus 1100 may include one or more processors 1110. The processor 1110 may support the apparatus 1100 to implement the methods described in the above method embodiments. The processor 1110 may be a general-purpose processor or a dedicated-purpose processor. For example, the processor may be a central processing unit (CPU). Alternatively, the processor may be other general-purpose processors, a digital signal processors (DSP), an application specific integrated circuit (ASIC), a field programmable gate array (FPGA) or other programmable logic devices, discrete gates or transistor logic devices, discrete hardware components, etc. A general purpose processor may be a microprocessor, or the processor may be any conventional processor or the like.

The apparatus 1100 may further include one or more memories 1120. The memory 1120 stores a program, and the program can be executed by the processor 1110, to cause the processor 1110 to perform the methods in the above method embodiments. The memory 1120 may be independent of the processor 1110 or may be integrated into the processor 1110.

The apparatus 1100 may further include a transceiver 1130. The processor 1110 may communicate with other devices or chips via the transceiver 1130. For example, the processor 1110 may transmit and receive data with other devices or chips via the transceiver 1130.

The embodiments of the present application further provide a computer-readable storage medium configured to a program. The computer-readable storage medium may be applied to the first network element or the second network element provided in the embodiments of the present application, and the program causes a computer to perform the methods performed by the first network element or the second network element in various embodiments of the present application.

The embodiments of the present application further provide a computer program product. The computer program product includes a program. The computer program product may be applied to the first network element or the second network element provided in the embodiments of the present application, and the program causes a computer to perform the methods performed by the first network element or the second network element in various embodiments of the present application.

The embodiments of the present application further provide a computer program. The computer program may be applied to the first network element or the second network element provided in the embodiments of the present application, and the computer program causes a computer to perform the methods performed by the first network element or the second network element in various embodiments of the present application.

It should be understood that the terms "system" and "network" may be used interchangeably in the present application. In addition, the terms used in the present application are only used to explain the specific embodiments of the present application and are not intended to limit the present application. The terms "first," "second," "third," "fourth" and the like in the specification, claims and drawings of the present application are used to distinguish different objects rather than to describe a specific order. In addition, the terms "includes/comprises," "has," and any variations thereof, are intended to cover a non-exclusive inclusion.

In the embodiments of the present application, the "indicate/indicated/indicating/indication" mentioned may be a direct indication, may also be an indirect indication, or may mean that there is an indication of an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the embodiment of the present application, "B corresponding to A" means that B is associated with A, and B can be determined based on A. However, it should also be understood that determining B based on A does not mean determining B based solely on A. B may also be determined based on A and/or other information.

In the embodiments of the present application, the term "correspond/corresponding/correspondence" may indicate that there is a direct or indirect correspondence between two, may also mean that there is an associated relationship between the two, or may also mean a relationship of indicating and being indicated or a relationship of configuring and being configured, etc.

In an embodiment of the present application, "predefined" or "preconfigured" may be implemented by pre-saving corresponding codes, tables or other manners that may be used to indicate related information in devices (e.g., including a terminal device and a network device), and a specific implementation manner thereof is not limited in the present application. For example, the predefined may refer to what is defined in a protocol.

In the embodiments of the present application, the "protocol" may refer to a standard protocol in the communication field. For example, the "protocol" may include an LTE protocol, an NR protocol, and a related protocol used in a future communication system, which is not limited in present application.

In the embodiments of the present application, the term "and/or" herein is only an association relationship to describe associated objects, which indicates that there may be three kinds of relationships. For example, "A and/or B" may mean three cases where: A exists alone, both A and B exist, and B exists alone. In addition, a character "/" herein generally means that associated objects before and after "/" are in an "or" relationship.

In various embodiments of the present application, values of serial numbers of the processes do not mean the order of execution. The execution order of each process should be determined by its function and internal logic, and should not constitute any limitation on the implementation process of the embodiments of the present application.

In the several embodiments provided in the present application, it should be understood that the disclosed systems, apparatuses, and methods may be implemented in other manners. For example, the apparatus embodiments described above are merely exemplary. For example, a division of units is merely a division based on a logical function and there may be other division manners in actual implementations. For example, multiple units or components may be combined or integrated into another system, or some characteristics may be omitted or skipped. In addition, coupling, direct coupling or communication connection between each other displayed or discussed may be indirect coupling or communication connection via some interfaces, apparatuses or units, which may be electrical, mechanical or in other forms.

The units described as separate components may or may not be physically separated, and the components displayed as units may be or may not be physical units. That is, they may be located in a place or distributed over multiple network units. Some or all of the units may be selected according to actual needs to achieve the purpose of the solutions of the embodiments.

In addition, various function units in various embodiments of the present application may be integrated into one processing unit, or various units may exist physically separately, or two or more units may be integrated into one unit.

All or some of the above embodiments may be implemented by software, hardware, firmware or any combination thereof. When implemented using software, all or some of the embodiments may be implemented in the form of a computer program product. The computer program product includes one or more computer instructions. When the computer program instructions are loaded and executed on a computer, all or some processes or functions described in the embodiments of the present application are generated. The computer may be a general purpose computer, a dedicated-purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via a wired manner (e.g., a coaxial cable, an optical fiber, a digital subscriber line (DSL)) or a wireless manner (e.g., an infrared or radio manner, microwave, etc.). The computer-readable storage medium may be any available medium that may be read by a computer or a data storage device such as a server or a data center that includes one or more available medium. The available medium may be a magnetic medium (e.g., a floppy disk, a hard disk, a magnetic tape), an optical medium (e.g., a digital video disc (DVD)), or a semiconductor medium (e.g., a solid state disk (SSD)).

The above description is only specific implementations of the present application, but the protection scope of the present application is not limited thereto. Any person skilled in the art familiar with the technical field may easily think of changes or substitutions within the technical scope disclosed in the present application, all of which should be included in the protection scope of the present application. Therefore, the protection scope of the present application shall be subject to the protection scope of the claims.

## Claims

1. A wireless communication method, comprising:
transmitting, by a first network element, a Quality of Service (QoS) parameter associated with a first sensing service to a second network element; wherein the QoS parameter is determined based on a requirement parameter of the first sensing service.

2. The method according to claim 1, wherein the QoS parameter is determined by a network element with sensing function in a core network.

3. The method according to claim 2, wherein
the first network element is the network element with sensing function, and the second network element is a terminal device associated with the first sensing service; or
the first network element is the network element with sensing function, the second network element is a policy control function (PCF), and the PCF corresponds to an internet protocol (IP) address of a terminal device associated with the first sensing service; or
the first network element is the network element with sensing function, and the second network element is a unified data repository (UDR).

4. The method according to claim 1, wherein the QoS parameter is determined by a terminal device associated with the first sensing service.

5. The method according to claim 4, wherein the first network element is the terminal device, the second network element is a session management function (SMF), and the transmitting, by the first network element, the QoS parameter associated with the first sensing service to the second network element comprises:
transmitting, by the first network element, a session modification request to the second network element, wherein the session modification request comprises the QoS parameter.

6. The method according to claim 5, wherein the session modification request further comprises one or more of:
an identifier of a session corresponding to the first sensing service; and
an identifier of a QoS flow in the session.

7. The method according to any one of claims 4 to 6, wherein before the transmitting, by the first network element, the QoS parameter associated with the first sensing service to the second network element, the method further comprises:
receiving, by the first network element, the requirement parameter of the first sensing service from a network element with sensing function.

8. The method according to any one of claims 1 to 7, wherein
the requirement parameter of the first sensing service comprises one or more of: a sensing scenario and a sensing service level; and
the QoS parameter comprises one or more of: an allocation and retention priority, a priority level, and a resource type.

9. The method according to any one of claims 1 to 7, wherein
the requirement parameter of the first sensing service comprises one or more of: a confidence level, a missed detection rate, and a false alarm rate; and
the QoS parameter comprises one or more of: a packet error rate and a maximum packet loss rate.

10. The method according to any one of claims 1 to 7, wherein
the requirement parameter of the first sensing service comprises a maximum sensing service latency; and
the QoS parameter comprises one or more of: a packet delay budget and a latency requirement.

11. The method according to any one of claims 1 to 7, wherein
the requirement parameter of the first sensing service comprises one or more of: sensing accuracy and sensing resolution; and
the QoS parameter comprises a maximum data burst volume.

12. The method according to any one of claims 1 to 7, wherein
the requirement parameter of the first sensing service comprises one or more of: a refreshing rate, sensing accuracy, sensing resolution, and a sensing scenario; and
the QoS parameter comprises one or more of: a guaranteed flow bit rate, a maximum flow bit rate, and a bandwidth requirement.

13. A wireless communication method, comprising:
receiving, by a second network element, a Quality of Service (QoS) parameter associated with a first sensing service transmitted by a first network element; wherein the QoS parameter is determined based on a requirement parameter of the first sensing service.

14. The method according to claim 13, wherein the QoS parameter is determined by a network element with sensing function in a core network.

15. The method according to claim 14, wherein
the first network element is the network element with sensing function, and the second network element is a terminal device associated with the first sensing service; or
the first network element is the network element with sensing function, the second network element is a policy control function (PCF), and the PCF corresponds to an internet protocol (IP) address of a terminal device associated with the first sensing service; or
the first network element is the network element with sensing function, and the second network element is a unified data repository (UDR).

16. The method according to claim 13, wherein the QoS parameter is determined by a terminal device associated with the first sensing service.

17. The method according to claim 16, wherein the first network element is the terminal device, the second network element is a session management function (SMF), and the receiving, by the second network element, the QoS parameter associated with the first sensing service transmitted by the first network element comprises:
receiving, by the second network element, a session modification request transmitted by the first network element, wherein the session modification request comprises the QoS parameter.

18. The method according to claim 17, wherein the session modification request further comprises one or more of:
an identifier of a session corresponding to the first sensing service; and
an identifier of a QoS flow in the session.

19. The method according to any one of claims 13 to 18, wherein
the requirement parameter of the first sensing service comprises one or more of: a sensing scenario and a sensing service level; and
the QoS parameter comprises one or more of: an allocation and retention priority, a priority level, and a resource type.

20. The method according to any one of claims 13 to 18, wherein
the requirement parameter of the first sensing service comprises one or more of: a confidence level, a missed detection rate, and a false alarm rate; and
the QoS parameter comprises one or more of: a packet error rate and a maximum packet loss rate.

21. The method according to any one of claims 13 to 18, wherein
the requirement parameter of the first sensing service comprises a maximum sensing service latency; and
the QoS parameter comprises one or more of: a packet delay budget and a latency requirement.

22. The method according to any one of claims 13 to 18, wherein
the requirement parameter of the first sensing service comprises one or more of: sensing accuracy and sensing resolution; and
the QoS parameter comprises a maximum data burst volume.

23. The method according to any one of claims 13 to 18, wherein
the requirement parameter of the first sensing service comprises one or more of: a refreshing rate, sensing accuracy, sensing resolution, and a sensing scenario; and
the QoS parameter comprises one or more of: a guaranteed flow bit rate, a maximum flow bit rate, and a bandwidth requirement.

24. A communication device, wherein the communication device is a first network element, and the first network element comprises:
a communication module, configured to transmit a Quality of Service (QoS) parameter associated with a first sensing service to a second network element; wherein the QoS parameter is determined based on a requirement parameter of the first sensing service.

25. The communication device according to claim 24, wherein the QoS parameter is determined by a network element with sensing function in a core network.

26. The communication device according to claim 25, wherein
the first network element is the network element with sensing function, and the second network element is a terminal device associated with the first sensing service; or
the first network element is the network element with sensing function, the second network element is a policy control function (PCF), and the PCF corresponds to an internet protocol (IP) address of a terminal device associated with the first sensing service; or
the first network element is the network element with sensing function, and the second network element is a unified data repository (UDR).

27. The communication device according to claim 24, wherein the QoS parameter is determined by a terminal device associated with the first sensing service.

28. The communication device according to claim 27, wherein the first network element is the terminal device, the second network element is a session management function (SMF), and the communication module is configured to transmit a session modification request to the second network element, wherein the session modification request comprises the QoS parameter.

29. The communication device according to claim 28, wherein the session modification request further comprises one or more of:
an identifier of a session corresponding to the first sensing service; and
an identifier of a QoS flow in the session.

30. The communication device according to any one of claims 27 to 29, wherein the communication module is further configured to: receive the requirement parameter of the first sensing service from a network element with sensing function, before the first network element transmits the QoS parameter associated with the first sensing service to the second network element.

31. The communication device according to any one of claims 24 to 30, wherein
the requirement parameter of the first sensing service comprises one or more of: a sensing scenario and a sensing service level; and
the QoS parameter comprises one or more of: an allocation and retention priority, a priority level, and a resource type.

32. The communication device according to any one of claims 24 to 30, wherein
the requirement parameter of the first sensing service comprises one or more of: a confidence level, a missed detection rate, and a false alarm rate; and
the QoS parameter comprises one or more of: a packet error rate and a maximum packet loss rate.

33. The communication device according to any one of claims 24 to 30, wherein
the requirement parameter of the first sensing service comprises a maximum sensing service latency; and
the QoS parameter comprises one or more of: a packet delay budget and a latency requirement.

34. The communication device according to any one of claims 24 to 30, wherein
the requirement parameter of the first sensing service comprises one or more of: sensing accuracy and sensing resolution; and
the QoS parameter comprises a maximum data burst volume.

35. The communication device according to any one of claims 24 to 30, wherein
the requirement parameter of the first sensing service comprises one or more of: a refreshing rate, sensing accuracy, sensing resolution, and a sensing scenario; and
the QoS parameter comprises one or more of: a guaranteed flow bit rate, a maximum flow bit rate, and a bandwidth requirement.

36. A communication device, wherein the communication device is a second network element, and the second network element comprises:
a communication module, configured to receive a Quality of Service (QoS) parameter associated with a first sensing service transmitted by a first network element; wherein the QoS parameter is determined based on a requirement parameter of the first sensing service.

37. The communication device according to claim 36, wherein the QoS parameter is determined by a network element with sensing function in a core network.

38. The communication device according to claim 37, wherein
the first network element is the network element with sensing function, and the second network element is a terminal device associated with the first sensing service; or
the first network element is the network element with sensing function, the second network element is a policy control function (PCF), and the PCF corresponds to an internet protocol (IP) address of a terminal device associated with the first sensing service; or
the first network element is the network element with sensing function, and the second network element is a unified data repository (UDR).

39. The communication device according to claim 36, wherein the QoS parameter is determined by a terminal device associated with the first sensing service.

40. The communication device according to claim 39, wherein the first network element is the terminal device, the second network element is a session management function (SMF), and the communication module is configured to receive a session modification request transmitted by the first network element, wherein the session modification request comprises the QoS parameter.

41. The communication device according to claim 40, wherein the session modification request further comprises one or more of:
an identifier of a session corresponding to the first sensing service; and
an identifier of a QoS flow in the session.

42. The communication device according to any one of claims 36 to 41, wherein
the requirement parameter of the first sensing service comprises one or more of: a sensing scenario and a sensing service level; and
the QoS parameter comprises one or more of: an allocation and retention priority, a priority level, and a resource type.

43. The communication device according to any one of claims 36 to 41, wherein
the requirement parameter of the first sensing service comprises one or more of: a confidence level, a missed detection rate, and a false alarm rate; and
the QoS parameter comprises one or more of: a packet error rate and a maximum packet loss rate.

44. The communication device according to any one of claims 36 to 41, wherein
the requirement parameter of the first sensing service comprises a maximum sensing service latency; and
the QoS parameter comprises one or more of: a packet delay budget and a latency requirement.

45. The communication device according to any one of claims 36 to 41, wherein
the requirement parameter of the first sensing service comprises one or more of: sensing accuracy and sensing resolution; and
the QoS parameter comprises a maximum data burst volume.

46. The communication device according to any one of claims 36 to 41, wherein
the requirement parameter of the first sensing service comprises one or more of: a refreshing rate, sensing accuracy, sensing resolution, and a sensing scenario; and
the QoS parameter comprises one or more of: a guaranteed flow bit rate, a maximum flow bit rate, and a bandwidth requirement.

47. A communication device, comprising a transceiver, a memory and a processor, wherein the memory is configured to store a program, and the processor is configured to invoke the program in the memory and control the transceiver to receive or transmit signals, to cause the terminal device to perform the method according to any one of claims 1 to 12 or claims 13 to 23.

48. An apparatus, comprising: a processor, configured to invoke a program from a memory to cause the apparatus to perform the method according to any one of claims 1 to 12 or claims 13 to 23.

49. A chip, comprising: a processor, configured to invoke a program from a memory to cause a device equipped with the chip to perform the method according to any one of claims 1 to 12 or claims 13 to 23.

50. A computer-readable storage medium, having a program stored thereon, wherein the program causes a computer to perform the method according to any one of claims 1 to 12 or claims 13 to 23.

51. A computer program product, comprising a program, wherein the program causes a computer to perform the method according to any one of claims 1 to 12 or claims 13 to 23.

52. A computer program, wherein the computer program causes a computer to perform the method according to any one of claims 1 to 12 or claims 13 to 23.
